# EUROPÄISCHE PATENTANMELDUNG

(11) **EP 2 843 274 A1**
(43) Veröffentlichungstag der Anmeldung: **04.03.2015**
(21) Anmeldenummer: 14181748.6
(22) Anmeldetag: 21.08.2014
(51) Int. Cl.: F16K 3/04, B60T 11/30, F15B 21/04, F16K 24/04

(54) **Abdichtende Ablassventilanordnung**

(30) Priorität: 30.08.2013 CN 201310390908
(71) Anmelder: Schaeffler Technologies AG & Co. KG, 91074 Herzogenaurach (DE)
(72) Erfinder: Huang, Chao, Shanghai (CN); Gao, Zhichuan, 201804 Shanghai (CN)

(57) **Zusammenfassung**

Die vorliegende Erfindung offenbart eine abdichtende Ablassventilanordnung, die durch Drehen zu öffnen ist und ein abdichtendes Ventilgehäuse und ein Ablassventil umfasst, welche jeweils einen kreisförmigen Querschnitt aufweisen. Das abdichtende Ventilgehäuse umschließt das Ablassventil, und das Ablassventil kann sich innerhalb des abdichtenden Ventilgehäuses drehen. In der Bodenseite des abdichtenden Ventilgehäuses sind eine mittig angeordnete zweite Ablassöffnung und eine damit verbundene innenliegende Vertiefung ausgebildet, deren innere Seitenwand einen ungleichen Abstand zur zweiten Ablassöffnung aufweist. Im oberen Ende des Ablassventils ist eine exzentrisch angeordnete erste Ablassöffnung ausgebildet, die einen Radialabstand zur zweiten Ablassöffnung aufweist, welcher größer als der minimale Abstand zwischen innerer Seitenwand der Vertiefung und zweiterAblassöffnung und kleiner als der maximale Abstand zwischen innerer Seitenwand der Vertiefung und zweiterAblassöffnung ist. Erfindungsgemäß wird das Ablassen von Luft vorteilhafterweise unabhängig von der Herstellung einer Dichtung durch eine Lageänderung zwischen abdichtendem Ventilgehäuse und Ablassventil erreicht. Zur Abdichtung wird auch kein zusätzliches Werkzeug benötigt, um den Ablassschalter zu steuern.

## Beschreibung

Die vorliegende Erfindung betrifft eine insbesondere in einem Hydraulikleitungssystem zum Ablassen von Luft oder einer Flüssigkeit dienende abdichtende Steuerventilanordnung.

Bei Hydrauliksystemen handelt es sich um ein Kraftübertragungssystem, das eine breite Anwendung bei verschiedenen Einrichtungen wie beispielsweise Bremsen und Kupplungen findet. In einem Hydrauliksystem kann das Hydrauliköl erst im abgeschlossenen Zustand gut arbeiten. Ist in einem Hydrauliksystem Luft vorhanden, so muss die Luft abgelassen werden, um einen Normalbetrieb des Hydrauliksystems aufrechtzuerhalten. Darüber hinaus muss bei Wartungsarbeiten zunächst das bereits im Hydrauliksystem bestehende Hydrauliköl und beim Einfüllen neuen Hydrauliköls die im System vorhandene Luft abgelassen werden, um ein problemloses Einfüllen des Hydrauliköls zu gewährleisten.

Die Verwendung einer Ablassschraube stellt das gebräuchlichste Verfahren zum Ablassen von Hydrauliköl und Luft dar. So ist aus dem chinesischen Gebrauchsmuster Nr. 201220405640.7 eine Ablassschraube für Hydrauliksysteme bekannt, die einen Schraubenschaft und einen damit verbundenen Schraubenkopf umfasst. Der Schraubenschaft umfasst wiederum einen mit einem Gewinde versehenen Gewindeabschnitt und einen mit dem Schraubenkopf verbundenen Verbindungsabschnitt, wobei in der Außenfläche des Gewindeabschnitts Entlüftungsrillen ausgebildet sind. Zur Entlüftung muss die Ablassschraube nicht vollständig herausgedreht und zur Abdichtung hingegen eingedreht und angezogen werden. Mit anderen Worten, die Funktionen Abdichten und Entlüften werden jeweils durch Ein- bzw. Herausdrehen der Schraube realisiert, wobei sich die beiden Vorgänge einander widersprechen. Des Weiteren lässt sich diese Ablassschraube trotz der offenbarten Verbesserungen nur mit Hilfe eines Werkzeuges oder eines Griffes ein- bzw. herausdrehen, was einen zusätzlichen Bauraum für die Ablassschraube in der Raumplanung erfordert. Aus diesem Grund eignet sich eine derartige Ablassschraube nicht zur Verwendung in einer z.B. kompakten Einrichtung. Andernfalls würde es zur Verschlechterung der Gestaltungsqualität oder zur Erhöhung des Wartungsaufwands kommen.

Daher ist eine Ablassventilanordnung wünschenswert, die nicht nur die Funktionen Abdichten und Entlüften erfüllen kann, sondern sich auch ohne Werkzeug oder Griff öffnen bzw. schließen lässt.

Der vorliegenden Erfindung liegt die Aufgabe zugrunde, eine Ablassventilanordnung anzubieten, die sich ohne Werkzeug oder Griff öffnen bzw. schließen lässt.

Erfindungsgemäß wird die Aufgabe durch eine abdichtende Ablassventilanordnung gelöst, die durch Drehen zu öffnen ist und ein abdichtendes Ventilgehäuse und ein Ablassventil umfasst, welche jeweils einen kreisförmigen Querschnitt aufweisen. Das abdichtende Ventilgehäuse umschließt das Ablassventil und bleibt mit seiner Bodenseite in dichter Anlage an dem Ablassventil, wobei sich das Ablassventil innerhalb des abdichtenden Ventilgehäuses drehen kann. In der Bodenseite des abdichtenden Ventilgehäuses sind eine mittig angeordnete zweite Ablassöffnung und eine damit verbundene Vertiefung ausgebildet, deren innere Seitenwand einen ungleichen Abstand zur zweiten Ablassöffnung aufweist. Im oberen Ende des Ablassventils ist eine exzentrisch angeordnete erste Ablassöffnung ausgebildet, die einen Radialabstand zur zweiten Ablassöffnung aufweist, welcher größer als der minimale Abstand zwischen innerer Seitenwand der Vertiefung und zweiter Ablassöffnung und kleiner als der maximale Abstand zwischen innerer Seitenwand der Vertiefung und zweiter Ablassöffnung ist.

Dem Stand der Technik gegenüber bietet die Erfindung folgende Vorteile: Das Ablassen von Luft wird, unabhängig von der Herstellung einer Dichtung, durch eine Änderung der Drehwinkelstellung zwischen abdichtendem Ventilgehäuse und Ablassventil erreicht. Zur Abdichtung wird auch kein zusätzliches Werkzeug benötigt, um den Ablassschalter zu steuern.

Es zeigen
FIG.1 in schematischer Darstellung eine abdichtende Ablassventilanordnung gemäß der Erfindung in einer geöffneten Stellung,
FIG.2 in schematischer Darstellung eine abdichtende Ablassventilanordnung gemäß der Erfindung in einer geschlossenen Stellung,

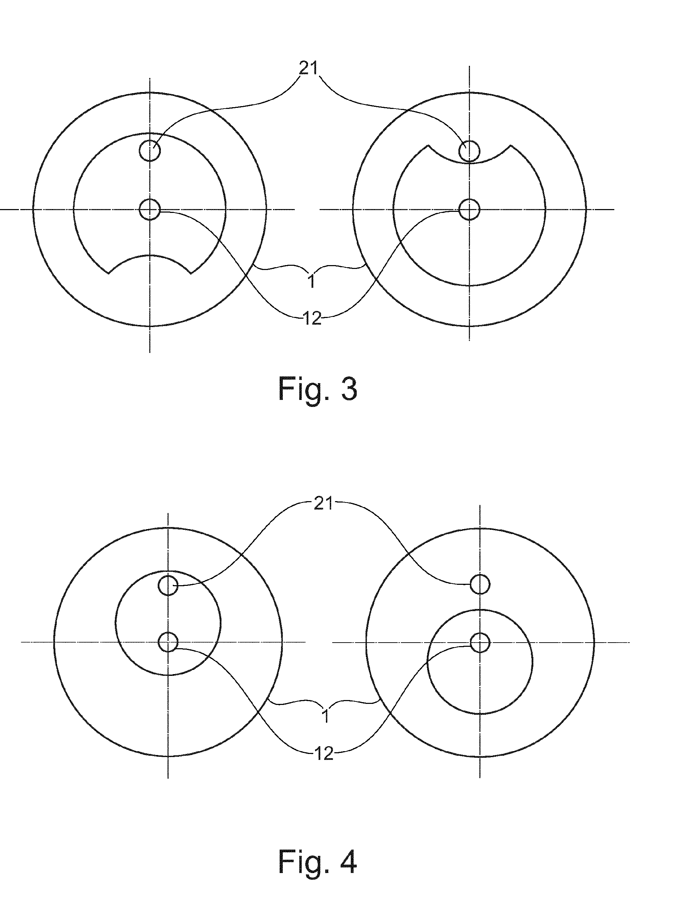

FIG.3 eine Schnittansicht eines Profildichtrings, der in einem ersten Ausführungsbeispiel einer abdichtenden Ablassventilanordnung gemäß der Erfindung zum Einsatz kommt,
FIG.4 eine Schnittansicht eines O-Rings, der in einem zweiten Ausführungsbeispiel einer abdichtenden Ablassventilanordnung gemäß der Erfindung zum Einsatz kommt.

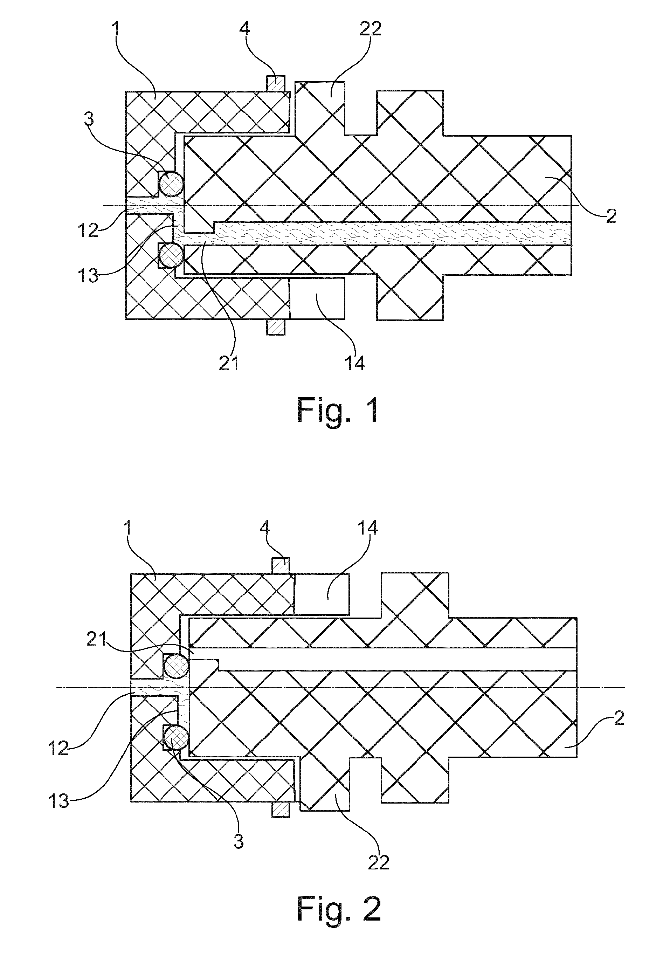

Die Erfindung betrifft eine abdichtende Ablassventilanordnung, die wie aus FIG.1 und 2 ersichtlich ein abdichtendes Ventilgehäuse 1 und ein Ablassventil 2 umfasst, welche jeweils die Form eines Kreiszylinders haben. Das abdichtende Ventilgehäuse 1 ist an einem Ende so geöffnet, dass die Öffnung das Ablassventil 2 dicht umschließt. Am anderen Ende ist es mit einer mittig angeordneten zweiten Ablassöffnung 12 versehen, die an einem Ende nach außen in die Umgebung mündet und am anderen Ende mit einer innenliegenden Vertiefung 13 verbunden ist. Hierbei hat die Vertiefung 13 die Form z.B. eines Exzenterkreises oder eines eingekerbten Kreises, so dass die einzelnen Stellen an der inneren Seitenwand der Vertiefung 13 jeweils einen anderen Abstand zur zweiten Ablassöffnung 12 aufweisen. Zudem liegt das Ablassventil 2 dicht am Boden des abdichtenden Ventilgehäuses 1 an und ist an seinem oberen Ende mit einer ersten Ablassöffnung 21 versehen, die mit einem Innenkanal des Ablassventils 2 verbunden ist. Dabei weist die erste Ablassöffnung 21 einen Radialabstand zur Mitte des Ablassventils 2 auf, welcher größer als der minimale Abstand zwischen innerer Seitenwand der Vertiefung 13 und zweiter Ablassöffnung 12 und kleiner als der maximale Abstand zwischen innerer Seitenwand der Vertiefung 13 und zweiter Ablassöffnung 12 ist.

Das Ablassventil 2 ist derart von dem abdichtenden Ventilgehäuse 1 umschlossen, dass es sich innerhalb des abdichtenden Ventilgehäuses drehen kann. So kann mit der erfindungsgemäßen abdichtenden Ablassventilanordnung, wenn die Vertiefung 13 zum Verbinden der ersten Ablassöffnung 21 mit der zweiten Ablassöffnung 12 mit der ersten Ablassöffnung 21 fluchtet (siehe FIG.1), ein Ablassen von Hydrauliköl bzw. Luft und - wenn die Vertiefung 13 nicht mit der ersten Ablassöffnung 21 fluchtet, so dass die erste Ablassöffnung 21 und die zweite Ablassöffnung 12 nicht miteinander in Verbindung stehen (vgl. FIG.2) - eine Abdichtung realisiert werden.

Ferner befindet sich innerhalb der an der Innenseite des abdichtenden Ventilgehäuses 1 ausgebildeten Vertiefung 13 ein verformbarer Dichtring 3, der dicht an der Innenwand der Vertiefung 13 anliegt und eine Höhe hat, die etwas größer als die Tiefe der Vertiefung 13 ist. Gelangt das Ablassventil 2 in dichte Anlage an den Boden des abdichtenden Ventilgehäuses 1, verformt sich der Dichtring 3 und ruft dadurch eine weitere Dichtwirkung hervor. Hierbei kann der Dichtring 3 je nach der Form der Vertiefung 13 als O-Ring oder Profilring ausgebildet sein.

Überdies umschließt das abdichtende Ventilgehäuse 1 das Ablassventil 2 und wird mittels eines Klemmstückes 4 fest in seiner Position gehalten, wodurch die Dichtwirkung weiter verbessert wird.

Zusätzlich hierzu ist in der Innenwand des abdichtenden Ventilgehäuses 1 eine Drehnut 14 und an der Außenseite des Ablassventils 2 ein Anschlagblock 22 ausgebildet, der sich bei einer Drehung des Ablassventils 2 relativ zu dem abdichtenden Ventilgehäuse 1 in der Drehnut 14 mitdrehen kann. Die Drehnut 14 ist kreisbogenförmig ausgebildet, so dass die erste Ablassöffnung 21 und die zweite Ablassöffnung 12 miteinander in Verbindung treten, wenn der Anschlagblock 22 das eine Ende der Drehnut erreicht (siehe FIG.1), oder nicht miteinander in Verbindung treten, wenn der Anschlagblock 22 das andere Ende der Drehnut erreicht (siehe FIG.2).

Die obigen Darlegungen stellen keine Einschränkung der vorliegenden Erfindung dar, sondern dienen nur der Beschreibung einiger beispielhafter Ausführungsformen der Erfindung. Vielmehr sind im durch die beigefügten Patentansprüche definierten Umfang verschiedene Abänderungen möglich, ohne dabei die Grundideen und den Rahmen der Erfindung zu verlassen.

## Patentansprüche

1. Abdichtende Ablassventilanordnung, umfassend ein abdichtendes Ventilgehäuse und ein Ablassventil, welche jeweils einen kreisförmigen Querschnitt aufweisen, wobei das abdichtende Ventilgehäuse das Ablassventil umschließt und mit seiner Bodenseite in dichter Anlage an dem Ablassventil bleibt, während sich das Ablassventil innerhalb des abdichtenden Ventilgehäuses drehen kann, **dadurch gekennzeichnet, dass** in der Bodenseite des abdichtenden Ventilgehäuses eine mittig angeordnete zweite Ablassöffnung und eine damit verbundene Vertiefung ausgebildet sind, deren innere Seitenwand einen ungleichen Abstand zur zweiten Ablassöffnung aufweist, wobei das Ablassventil an seinem oberen Ende mit einer exzentrisch angeordneten ersten Ablassöffnung versehen ist, die einen Radialabstand zur zweiten Ablassöffnung aufweist, welcher größer als der minimale Abstand zwischen innerer Seitenwand der Vertiefung und zweiter Ablassöffnung und kleiner als der maximale Abstand zwischen innerer Seitenwand der Vertiefung und zweiter Ablassöffnung ist.

2. Abdichtende Ablassventilanordnung gemäß Anspruch 1, **dadurch gekennzeichnet, dass** sich in der Vertiefung ein verformbarer Dichtring befindet, der dicht an der inneren Seitenwand der Vertiefung anliegt.

3. Abdichtende Ablassventilanordnung gemäß Anspruch 2, **dadurch gekennzeichnet, dass** der Dichtring als O-Ring oder Profilring ausgebildet ist.

4. Abdichtende Ablassventilanordnung gemäß einem der Ansprüche 1 bis 3, **dadurch gekennzeichnet, dass** an der Außenseite des abdichtenden Ventilgehäuses ein Klemmstück angebracht ist, das dem Befestigen des Ablassventils innerhalb des abdichtenden Ventilgehäuses dient.

5. Abdichtende Ablassventilanordnung gemäß einem der Ansprüche 1 bis 3, **dadurch gekennzeichnet, dass** in der inneren Seitenwand des abdichtenden Ventilgehäuses eine bogenförmige Drehnut und an der Außenseite des Ablassventils ein Anschlagteil ausgebildet ist, das sich in der Drehnut drehen kann, wobei die erste Ablassöffnung und die zweite Ablassöffnung miteinander in Verbindung treten, wenn das Anschlagteil das eine Ende der Drehnut erreicht, oder nicht miteinander in Verbindung treten, wenn das Anschlagteil das andere Ende der Drehnut erreicht.

6. Abdichtende Ablassventilanordnung gemäß Anspruch 4, **dadurch gekennzeichnet, dass** in der inneren Seitenwand des abdichtenden Ventilgehäuses eine bogenförmige Drehnut und an der Außenseite des Ablassventils ein Anschlagteil ausgebildet ist, das sich in der Drehnut drehen kann, wobei die erste Ablassöffnung und die zweite Ablassöffnung miteinander in Verbindung treten, wenn das Anschlagteil das eine Ende der Drehnut erreicht, oder nicht miteinander in Verbindung treten, wenn das Anschlagteil das andere Ende der Drehnut erreicht.
